Europäisches Patentamt

European Patent Office

Office européen des brevets

(19)

(11) Publication number: **0 005 852**
**B1**

(12) **EUROPEAN PATENT SPECIFICATION**

(45) Date of publication of patent specification: **26.09.84**

(51) Int. Cl.³: **G 01 V 9/04, G 02 B 27/28**

(21) Application number: **79101741.1**

(22) Date of filing: **01.06.79**

(54) **Reflection light barrier apparatus capable of recognizing strongly reflecting objects.**

(30) Priority: **05.06.78 DE 2824583**

(43) Date of publication of application:
**12.12.79 Bulletin 79/25**

(45) Publication of the grant of the patent:
**26.09.84 Bulletin 84/39**

(84) Designated Contracting States:
**BE FR IT NL SE**

(56) References cited:
**DE-A-1 934 321**
**DE-A-2 238 049**
**DE-A-2 647 285**
**DE-A-2 654 520**
**GB-A-1 038 042**
**GB-A-1 038 402**
**US-A-3 066 797**

(73) Proprietor: **Erwin Sick GmbH Optik-Elektronik
Sebastian-Kneipp-Strasse 1
D-7808 Waldkirch (DE)**

(72) Inventor: **Buchholz, Karl-Otto
Wisserwandstrasse 11
D-7808 Waldkirch (DE)**
Inventor: **Erdmann, Jürgen
Eisenbahnstrasse 3
D-7808 Waldkirch 3 (DE)**
Inventor: **Fetzer, Günter
Gewerbestrasse 43
D-7803 Gundelfingen (DE)**

(74) Representative: **Manitz, Gerhart, Dipl.-Phys. Dr.
et al
MANITZ, FINSTERWALD & ROTERMUND
Robert-Koch-Strasse 1
D-8000 München 22 (DE)**

Courier Press, Leamington Spa, England.

## Description

The invention relates to reflection light barrier apparatus capable of recognising also strongly reflecting objects within a region monitored by the apparatus.

In light barrier apparatus of the autocollimation kind the light transmitter and light receiver are united in a housing. The separation of the transmitted and received light beam can for example take place by means of a beam splitting mirror so that one and the same objective is used for the transmitted and received beams. It is however also possible to use two objectives arranged directly alongside one another for the transmitted and received light as the retroreflectors which cooperate with the light transmitter-receiver do not exactly reflect an incident light beam back on itself but rather reflect it back within a narrowly defined solid angle. Thus a relatively large fraction of the transmitted light beam from the transmitting objective (lens) will be deflected at the retroreflector towards a receiving objective arranged directly alongside the transmitting objective.

Known autocollimation light barriers operate such that the transmitted light beam is reflected from the retroreflector to the receiver where the reflected beam is received by a photoelectric converter and converted into an electrical signal which is applied to an electronic processing unit. The processing unit delivers, at its output, in the simplest case, an electrical, optical or acoustic indication of whether the light beam passes freely between the light transmitter-receiver and the reflector or whether it is interrupted by an obstacle.

Problems however arise if it is also intended to recognize strongly reflecting objects within the monitored region. The reason for this is that the transmitted light beam is not only reflected at the reflector but also at the object to be recognised. The receiver may therefore still receive light when a reflecting object enters the monitored region so that in this case the presence of the obstacle within the monitored region is not signalled.

One way of overcoming this problem is disclosed in GB—A 1 038 402. In this arrangement the apparatus comprises a light transmitter and a light receiver including a photoelectric converter arranged at one side of the monitored region. A retroreflector, on which a beam of light from the light transmitter falls, is provided at the other side of the monitored region for reflecting the beam of light substantially back on itself towards the light receiver. A first linear polariser is positioned in front of the light transmitter and a second linear polariser is provided in front of the retroreflector. The linear polariser positioned in front of the light transmitter is in this arrangement continuously rotated so that a motor is required. A similar arrangement is disclosed in DE—A 19 34 321 (this latter reference also shows a further arrangement in which a linear polariser is not provided in front of the light transmitter but instead before one of two light receivers).

The object underlying the present invention is to provide improved reflection light barrier apparatus which is capable of recognising also strongly reflecting objects within the monitored regions.

To satisfy this object the present invention provides, in apparatus of the kind known from GB—A 10 38 402, that the first linear polariser is stationary, that a second stationary linear polariser having a plane of polarisation rotated through 90° relative to that of the first linear polariser is provided in front of the light receiver, and that a retroreflector is used which has the capability of producing depolarisation.

Thus the normally passive retroreflector is made into an active retroreflector so that it produces depolarisation of the polarised light coming from the transmitter. The linearly polarised light transmitted from the transmitter is thus only recognised by the receiver as light when it is reflected from the active retroreflector. Thus the depolarising characteristic of the retroreflector ensures that the linearly polarised transmitted light which is incident on the retroreflector is reflected as unpolarised light. The receiver is then able to recognise that component which has a plane of oscillation which is permitted to reach the photoelectric converter. This effect of depolarisation does not however occur from the previously disturbing surface reflections from strongly reflecting objects because the original plane of oscillation of the transmitted light remains unchanged. The received radiation with this plane of oscillation is however not recognised at the receiver because of the 90° difference between the planes of polarisation, so that in this case no output signal appears at the photoelectric converter. The invention thus provides a significant increase in contrast between radiation coming from the reflector and radiation originating from surface reflection at the strongly reflecting object.

Furthermore no motor is required as it is the case with the known prior art arrangements of GB—A 1 038 402 and DE—A 19 34 321.

Reflection light barrier apparatus is admittedly known from DE—A—22 38 049 in which first and second stationary linear polarisers with respective planes of polarisation rotated through 90° relative to one another are provided in front of the light transmitter and receiver. However this known arrangement, which is used to monitor a railway level crossing, is not suitable for reliably recognising strongly reflecting objects within the level crossing area, and does not use a retroreflector which reflects an incident beam of light back on itself but rather makes use of a normal reflector in front of which there is positioned a quarter wave plate which rotates the plane of polarisation of an incident light beam through 90°.

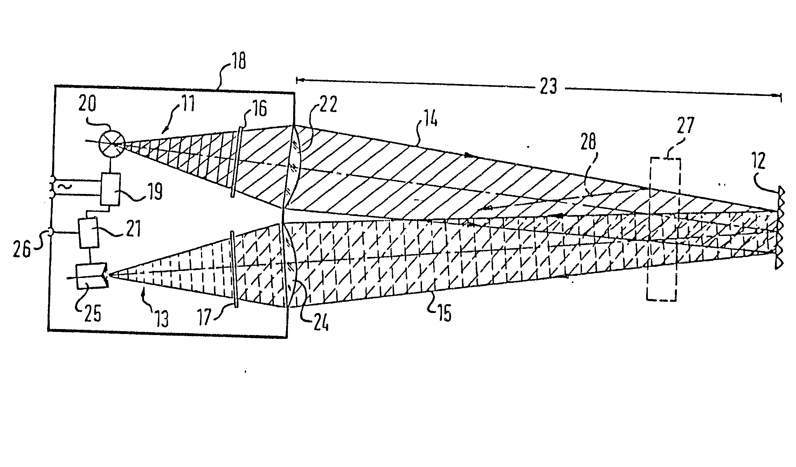

The invention will now be described by way of example only and with reference to the accompanying drawing the single figure of which schematically illustrates an autocollimation light barrier in accordance with the invention.

The housing 18 of the light transmitter-receiver unit includes a power supply 19 which can be directly supplied from the mains and which feeds a radiation source 20 in particular a gallium arsenide diode and an electronic processing unit 21. The light radiated from the radiation source 20 is formed into a sharply defined light barrier transmitted ray 14 via a condensor system, which for the purposes of simplicity is not shown but is well known per se, and a front objective lens 22. The transmitted beam 14 passes through the monitored region 23 at the end of which there is located a retroreflector 12 which reflects the transmitted light beam 14 back towards the transmitter receiver unit through a narrowly defined solid angle. In this manner a received beam of light selected from this solid angle beam reaches a further front objective lens 24 which is arranged directly alongside the front objective lens 22 of the transmitter and which concentrates the received light onto a photoelectric converter 25. The photoelectric converter 25 is connected to the electronic processing unit which provides a recognition signal 26 at its output depending on whether or not the quantity of light received by the photoelectric converter 25 is above a predetermined threshold.

In accordance with the invention a polariser 16 is arranged between the front objective lens 22 and the radiation source 20 which linearly polarises the transmitted light beam 14. The plane of polarisation is preferably at the location of the smallest aperture of the rays within the apparatus.

As, in accordance with the invention, the retroreflector 12 is of the kind which has a significant capability for producing depolarisation the received light beam 15 which reaches the front objective lens of the receiver is at least extensively depolarised. In accordance with the invention a further polariser 17 is arranged between the front objective 24 and the photoelectric converter 25 which only allows the through passage of light the oscillations or vibrations of which take place in a plane which is rotated through 90° relative to the plane of oscillation of the transmitted light beam 14. Thus if the monitored region 23 is free the part of the light beam 15 which has a plane of oscillation with a component in the direction of the transmission plane of the polariser 17 is transmitted to the photoelectric converter 25.

If now an object 27 illustrated in broken lines and having a shiny surface enters the transmitted light beam 14 then light 28, which is likewise only shown in broken lines, will be reflected from its surface to the light receiver 13 within the housing 18. As however simple mirror surfaces do not at least significantly de-polarise incident light the light beam 28 is linearly polarised in the same plane as the light beam 14 from the light transmitter 11. This plane of oscillation is at right angles to that which is transmitted by the polariser 17 so that in this case no received light reaches the photoelectric converter 25 and the processing unit 25 thus signals the presence of an object in the monitored region 23.

For achieving a depolarisation effect arrangements of synthetic triple mirrors can be used which additionally bring about a certain rotation of the plane of polarisation.

Synthetic parts generally show a pronounced depolarisation effect on account of their internal stresses.

Scotchlite® type foils can be manufactured both with and without depolarisation effects. A good depolarisation effect is shown by the Scotchlite foils having the designation "diamond-grade".

The polarisation filters 16 and 17 are shown in the drawing arranged behind the front lenses 22, 24 as non-depolarising silicate glass is used for the lenses. The polarisation filter 16 should however be arranged in front of the front lens 22 if this is made of synthetic material as synthetic lenses frequently work in a depolarising manner on account of their internal stresses. The polariser 17 should likewise also be arranged in front of the lens 24 if the latter is made of a transparent synthetic material.

## Claims

1. Reflection light barrier apparatus capable of recognising also strongly reflecting objects within a region monitored by the apparatus, the apparatus comprising a light transmitter (11) and a light receiver (13) including a photoelectric converter (25) arranged at one side of the monitored region (23); a retroreflector (12), on which a beam of light from said light transmitter (11) falls, at the other side of the monitored region (23) for reflecting said beam of light substantially back on itself towards said light receiver (13); and a first linear polariser (16) positioned in front of said light transmitter, characterised in that the first linear polariser (16) is stationary; in that a second stationary linear polariser (17) having a plane of polarisation rotated through 90° relative to that of the first linear polariser is provided in front of said light receiver (13); and in that a retroreflector (12) is used which has the capability of producing depolarisation.

2. Reflection light barrier apparatus in accordance with claim 1 and characterised in that the retroreflector (12) is a synthetic triple mirror retroreflector.

3. Reflection light barrier apparatus in accordance with claim 2 and characterised in that the retroreflector (12) is a depolarising "Scotchlite"® foil.

## Revendications

1. Appareil à barrière de lumière à réflexion capable de reconnaître également des objets fortement réfléchissants dans une région contrôlée par l'appareil, l'appareil comprenant un émetteur de lumière (11) et un récepteur de lumière (13) comportant un convertisseur photo-électrique (25) disposé sur un premier côté de la région contrôlée (23); un rétroréflecteur (12) sur lequel un faisceau de lumière provenant dudit émetteur de lumière (11) arrive, situé sur l'autre côté de la région contrôlée (23) afin de réfléchir ledit faisceau de lumière sensiblement en arrière sur lui-même vers ledit récepteur de lumière (13); et en premier polariseur linéaire (16) positionné en avant dudit émetteur de lumière, caractérisé en ce que le premier polariseur linéaire (16) est fixe; en ce qu'un second polariseur linéaire fixe (17) ayant un plan de polarisation tourné de 90° par rapport à celui du premier polariseur linéaire est prévu en avant dudit récepteur de lumière (13), et en ce qu'il est utilisé un rétroréflecteur (12) qui a la possibilité de produire une dépolarisation.

2. Appareil à barrière de lumière à réflexion selon la revendication 1 et caractérisé en ce que le rétroréflecteur (12) est un rétroréflecteur synthétique à miroir triple.

3. Appareil à barrière de lumière à réflexion selon la revendication 2 et caractérisé en ce que le rétroréflecteur (12) est une feuille dépolarisante "Scotchlite"®.

## Patentansprüche

1. Reflexionslichtschranke, geeignet zum Erkennen auch stark reflektierender Gegenstände innerhalb eines von der Lichtschranke überwachten Bereiches, mit einem Lichtsender (11) und einem einen photoelektrischen Wandler (25) enthaltenden Lichtempfänger (13), die an einer Seite des überwachten Bereiches (23) angeordnet sind, mit einem an der anderen Seite des überwachten Bereiches (23) angeordneten Retroreflektor (12), auf den ein Lichtstrahl von dem Lichtsender (11) auffällt zum Reflektieren des Lichtstrahles im wesentlichen in sich selbst zu dem Lichtempfänger (13), hin, und mit einem ersten, vor dem Lichtsender befindlichen Linear-Polarisator (16), dadurch gekennzeichnet, daß der erste Linear-Polarisator (16) stationär ist, daß ein zweiten stationärer Linear-Polarisator (17) mit einer gegenüber der Polarisationsebene des ersten Linear-Polarisator um 90° verdrehten Polarisationsebene vor dem Lichtempfänger (13) vorgesehen ist, und daß ein Retroreflektor (12) verwendet wird, der die Fähigkeit besitzt Depolarisation zu erzeugen.

2. Reflexionslichtschranke nach Anspruch 1, dadurch gekennzeichnet, daß der Retroreflektor (12) ein Kunststoff-Tripelspiegel-Retroreflektor ist.

3. Reflexionslichtschranke nach Anspruch 2, dadurch gekennzeichnet, daß der Retroreflektor (12) eine depolarisierende "Scotchlite"®-Folie ist.

0 005 852